# EUROPÄISCHE PATENTSCHRIFT

(11) **EP 0 431 233 B1**
(45) Veröffentlichungstag und Bekanntmachung des Hinweises auf die Patenterteilung: **03.08.1994**
(21) Anmeldenummer: 89810932.7
(22) Anmeldetag: 08.12.1989
(51) Int. Cl.: H01J 41/06

(54) **Partialdruckmesszelle mit Kaltkathodenionenquelle für die Lecksuche in Vakuumsystemen**
Partial pressure gauge using a cold-cathode ion source for leak detection in vacuum systems
Jauge à pression partielle utilisant une source d'ions à cathode froide pour la détection de fuites dans des systèmes à vide

(43) Veröffentlichungstag der Anmeldung: 12.06.1991
(73) Patentinhaber: Balzer, Dinoo, Dr., CH-8156 Oberhasli (CH)
(72) Erfinder: Balzer, Richard, (CH)
(74) Vertreter: Monsch, René

(56) Entgegenhaltungen:
- GB-A- 1 456 825
- US-A- 3 399 341
- SOLID STATE TECHNOLOGY, VOL. 32, NO. 10, OKTOBER 1989, WASHINGTON US, SEITEN 99-103 ; R.N.PEACOCK ET AL: "COMPARISON OF HOT AND COLD CATHODE IONIZATION GAUGES"

## Beschreibung

Die vorliegende Erfindung betrifft eine Partialdruckmesszelle auf dem Prinzip der Massenspektrometrie unter Verwendung einer magnetisch geführten, modifizierten Kaltkathodenentladung als Ionenquelle.

Für die Prüfung auf Dichtigkeit, Ortung von Lecks und Messung von Leckraten in Vakuumsystemen werden im allgemeinen Partialdruckmessgeräte zusammen mit einem Testgas verwendet, wobei diese Geräte in den meisten Fällen auf dem Prinzip der Massenspektrometrie beruhen. Es ist im Laufe der Zeit immer versucht worden, diese Spektrometer zu vereinfachen und zu kompakten Messzellen zu entwickeln, (vergl. z.B. UK Patent Application, GB 2191334 A), doch ist der Aufwand, insbesondere für die Ionenerzeugung, immer noch beträchtlich geblieben.

Eine besonders kompakte Messzelle, welche grosse Empfindlichkeit mit geringem Aufwand verbindet, liesse sich durch die Kombination von magnetischer Massentrennung mit einer wirksamen Kaltkathodenionenquelle realisieren. Eine solche Messzelle wäre nur unwesentlich aufwendiger als eine der üblichen Kaltkathoden-Vakuummessröhren, wie sie seit langem in der Vakuumtechnik gebräuchlich sind. Diese bestehen grundsätzlich aus einem Entladungsraum, in dem mittels einer Kombination von elektrischem und magnetischem Feld Elektronen derart eingeschlossen sind, dass sie, im Idealfall, ohne Stösse mit Gasmolekülen den Raum nicht verlassen, d.h. die Anode der Entladungsstrecke nicht erreichen können. Die eingeschlossenen Elektronen entsprechen einem grossen Elektronenstrom, welcher die Restgase des Vakuums wirkungsvoll ionisiert. Die Grösse dieses Elektronenstromes hängt dabei in erster Linie vom elektrischen und magnetischen Feld und der Geometrie des Entladungsraumes ab und ist über viele Dekaden des Restgasdruckes praktisch konstant, weshalb der Ionisationsstrom dem Restgasdruck proportional ist und dem Entladungsstrom durch die Messzelle entspricht. Vakuummesszellen dieses Prinzips sind in Literatur und Praxis auch unter der Bezeichnung Penningmesszelle, Magnetronmesszelle und invertierte Magnetronmesszelle bekannt (Lit.: Manfred v. Ardenne, Tabellen zur angewandten Physik, Bd. II (1975) 169-172).

Die Kaltkathodenentladung einer derartigen Messzelle stellt auch eine ausgezeichnete Ionenquelle dar. Die Streuung der Ionenenergie ist bei einer solchen Ionenquelle jedoch so gross, dass bei der Verwendung in einem Massenspektrometer die erforderliche Auflösung, welche bekanntlich proportional zur relativen Streuung der Ionenenergie ΔE/E ist, erst durch eine zusätzliche Beschleunigung der Ionen auf eine höhere Energie erreicht werden könnte. Höhere Ionenenergien fordern aber wiederum höhere Feldstärken zur Massentrennung, weshalb bei den bisher bekannten Massenspektrometern zur Lecksuche oder Restgasanalyse wesentlich aufwendigere Ionenquellen mit Glühkathode und zusätzlichen Extraktions- und Fokussierspannungen benützt werden.

Die vorliegende Erfindung betrifft eine Partialdruckmesszelle auf dem Prinzip der Massenspektrometrie und ist dadurch gekennzeichnet, dass bei einer, als Ionenquelle eines Massenspektrometers dienenden Kaltkathodenentladung mit magnetischer Entladungsführung die Entladung durch ein inhomogenes Magnetfeld derart modifiziert wird, dass Ionen mit niedriger Energie und kleiner Streuung der Energie durch eine oder mehrere Oeffnungen in der Kathode emittiert werden und dass diese Ionen ohne weitere Beschleunigung oder Fokussierung in einem Magnetfeld nach ihrem Impuls getrennt und gemessen werden. Die Realisation dieser Idee beruht auf der Tatsache, dass in einer magnetisch geführten Entladung die Elektronendichte vom elektrischen und magnetischen Feld bestimmt wird. Ersetzt man das üblicherweise in erster Näherung homogene Magnetfeld im Entladungraum durch ein inhomogenes mit einer ausgeprägten lokalen Felderhöhung, so bewirkt dies eine lokale hohe Elektronendichte, womit wiederum der Ort der Ionisation des Restgases eng begrenzt wird. Ionen aus dieser Zone werden vom elektrischen Feld im Entladungsraum gegen die Kathode beschleunigt und verlassen den Entladungsraum durch Oeffnungen in der Kathode. Sofern die Ionisationszone nahe bei der Kathode liegt, ist die Energie der aus der Kathode austretenden Ionen klein. Die Streuung der Energie dieser Ionen ist ebenfalls klein wegen der durch die Form des inhomogenen Magnetfeldes eng begrenzten Ionisationszone, womit die wesentliche Voraussetzung für ein genügendes Massenauflösungsvermögen erfüllt ist. Die Lage der Ionisationszone nahe der Kathode hat ferner zur Folge dass die Potentialdifferenz zwischen Ionisationszone und Kathode sehr wenig abhängig von der Betriebsspannung der Entladung ist, und somit eine praktisch konstante Ionenenergie auch bei einer Aenderung der Entladungsspannung um mehrere Kilovolt beobachtet wird. Wegen dieser niedrigen Energie ist die Ablenkung in einem relativ schwachen Analysatorfeld so gross, dass keine besonders hohe Anforderungen an die Blenden zur Trennung der verschiedenen Massen gestellt werden. Unter diesen Voraussetzungen kann der Analysator bequem in das Magnetsystem, welches das für die Kaltkathodenentladung benötigte Feld liefert, integriert werden. Besonders einfach lässt sich dies bei der Elektrodenanordnung des invertierten Magnetrons bewerkstelligen. Die Rückführung des magnetischen Flusses aus dem Entladungsraum verläuft hier natürlicherweise parallel zum Kathodenzylinder. Ionen, die durch Oeffnungen in der Kathode aus der Entladung austreten, gelangen daher direkt in ein Magnetfeld das senkrecht zu ihrer Bewegungsrichtung steht, wodurch die Analyse der Ionenimpulse in einfachster weise erfolgen kann.

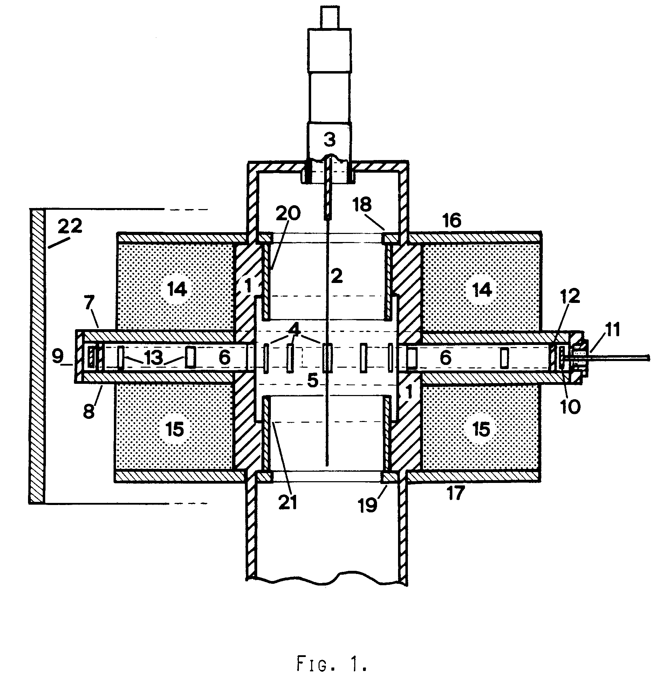

Als Beispiel ist in Figur 1 der Längsschnitt durch eine gemäss dieser Ausführungen konstruierte Messzelle schematisch dargestellt. Der Kathodenzylinder 1 eines invertierten Magnetrons, mit Anode 2 und Hochspannungsdurchführung 3, ist an seinem Umfang mit 12 schlitzförmigen Oeffnungen 4 versehen, durch welche Ionen aus dem Entladungsraum 5 in eine zylindrische Kammer 6, begrenzt durch zwei Scheiben 7 und 8 und einen kurzen Zylinder 9, zur magnetischen Massentrennung gelangen. Zuäusserst in der Kammer befindet sich ein ringförmiger Ionenkollektor 10, welcher elektrisch isoliert montiert ist und über eine Vakuumdurchführung 11 die Messung des Ionenstromes gestattet. Der Ionenkollektor 10 ist gegen die Kathodenöffnungen 4 abgetrennt durch den Blendenring 12, der ebenfalls 12 schlitzförmige Oeffnungen 13 aufweist, die alle um eine gewisse Distanz gegen die Kathodenöffnungen 4 versetzt sind. Jede Oeffnung im Kathodenzylinder bildet zusammen mit dem zugehörigen Schlitz im Blendenring ein einfaches Analysatorsystem, wobei die Versetzung der beiden Oeffnungen gegeneinander den Bereich der Ionenmassenzahl bestimmt, für welche das Analysatorsystem die maximale Transmission aufweist. Sind alle Analysatorsysteme auf den gleichen Massenzahlbereich eingestellt und werden alle Ionenströme auf einem Ionenkollektorring 10 gemessen, so bewirkt die Parallelschaltung aller Systeme einen beträchtlich höheren Ionenstrom und damit eine erhöhte Empfindlichkeit. Denkbar ist auch eine Anordnung, bei der die Systeme einzeln oder in Gruppen auf verschiedene Massenzahlbereiche eingestellt sind und für jeden Bereich ein separater Ionenkollektor verwendet wird, wodurch die simultane Messung verschiedener Restgaskomponenten ermöglicht wird.

Das Magnetsystem der Zelle setzt sich zusammen aus zwei Permanentmagnetringen 14 und 15, den zwei Scheiben 16 und 17 und den Polringen 18 und 19. Diese Scheiben und Polringe sowie die Kammerwände 7 und 8 bestehen aus ferromagnetischem Material hoher Permeabilität, während der Kathodenzylinder 1 und der äussere Kammerzylinder 9 aus einem antimagnetischen Material, wie z.B. antimagnetischem rostfreiem Stahl, gefertigt sind. Auf diese Weise wird sowohl das für die Entladung erforderliche Magnetfeld im Entladungsraum 5 wie auch das zur Analyse der emittierten Ionen nötige Magnetfeld im Kammerspalt 6 mit nur einem Magnetsystem erhalten.

Zur Erzeugung der für diese Erfindung charakteristischen Entladungsform ist eine Feldinhomogenität mit einer lokalen Felderhöhung in der Nähe der Kathodenöffnungen erforderlich. In Systemen mit grossem Durchmesser des Kathodenzylinders und geringer Höhe kann die Ueberlagerung des Streufeldes des Spaltes 6 mit dem axialen Feld der beiden Magnetringe bereits eine genügende Feldinhomogenität bewirken, im allgemeinen wird aber die benötigte Form des Magnetfeldes eine geeignete Ausgestaltung der flussführenden Teile zum und im Entladungsraum bedingen. Bei der gezeichneten Konstruktion sind dazu zwei dünne Zylinder 20 und 21 aus Material hoher Permeabilität innerhalb des Kathodenzylinders als Flussformer angebracht.

Das Magnetfeld zur Trennung der Ionen sollte möglichst gross sein. Dagegen darf das mittlere Magnetfeld im Entladungsraum nicht wesentlich höher gewählt werden als es für eine stabile Entladung über den gesamten Druckbereich (z.B. 10⁻² bis 10⁻⁷ Pa) erforderlich ist, da sonst die Begrenzung der Ionisationszone durch die Feldinhomogenität unscharf wird. Diese beiden, einander entgegengesetzten Forderungen können bequem erfüllt werden durch die Verwendung starker Permanentmagnete einerseits und die Dimensionierung und Positionierung der magnetischen Abschirmung 22 andrerseits. Sie bildet einen magnetischen Nebenschluss zum Entladungsraum und ermöglicht damit, das Magnetfeld in diesem auf den optimalen Wert einzustellen. Zusätzlich verkleinert sie das in vielen Fällen störende magnetische Streufeld der Messzelle.

Der Vorteil von Partialdruckmesszellen gemäss dieser Erfindung liegt vorallem in deren ausserordentlichen Einfachheit. Wie auch das gezeichnete Beispiel von Fig. 1 zeigt, ist der materielle Aufwand nur wenig höher als der einer heute gebräuchlichen Kaltkathoden-Vakuummessröhre, deren bekannte Unempfindlichkeit gegen Lufteinbrüche und korrosive Restgaskomponenten sie ebenfalls besitzt. Der bescheidene Aufwand zeigt sich auch in der benötigten Elektronik, die der eines Kaltkathoden-Vakuummessgerätes, ergänzt durch eine zweite Strommessung im nA-Bereich, entspricht. Die Empfindlichkeit dieser neuartigen Messzellen lässt sich durchaus mit der weit aufwendigerer Partialdruckmessgeräte vergleichen. Besonders hervorzuheben ist die Tatsache, dass die, dem zu messenden Partialdruck proportionalen, Ionenströme recht gross sind, was auf der guten Ausbeute der verwendeten Ionenquelle und dem, durch die zahlreichen parallel wirkenden Kathodenöffnungen bedingten, grossen effektiven Ionenstrahlquerschnitt beruht. Partialdruckmesszellen der in dieser Erfindung beschriebenen Art sind besonders für die Messung des Partialdruckes von Helium und Wasserstoff geeignet. Sie werden daher mit Vorteil in Lecksuchgeräten Verwendung finden. Da nebst dem Partialdruck für eine vorbestimmte Massenzahl auch der Totaldruck in Form des Zellenstromes gemessen wird, können diese Messzellen die bisher gebräuchlichen Hochvakuummesszellen ersetzten mit dem Vorteil, ohne ins Gewicht fallende Mehrkosten jederzeit die Dichtigkeit des Vakuumsystems überprüfen zu können. Wird der Massenzahlbereich der Partialdruckmesszelle von Wasserstoff gewählt, ermöglicht die Messung der H⁺-Ionen die Ueberwachung des Wasserdampfrestdruckes im Vakuumsystem.

Denkbar sind auch Messzellen der vorgeschlagenen Art, bei denen die zu messende Gassorte durch eine geeignete Verschiebung der Blenden des Analysators während des Betriebs gewählt werden kann, oder Messzellen, deren einzelne Analysatorsysteme auf unterschiedliche Massenzahlen eingestellt sind, womit die gleichzeitige Messung mehrerer Restgaskomponenten möglich wird.

## Patentansprüche

1. Eine, besonders für die Lecksuche in Vakuumsystemen geeignete, Partialdruckmesszelle, dadurch gekennzeichnet, dass bei einer, als Ionenquelle eines Massenspektrometers dienenden, Kaltkathodenentladung mit magnetischer Entladungsführung die Entladung durch ein inhomogenes Magnetfeld derart modifiziert wird, dass Ionen mit niedriger Energie und kleiner Streuung der Energie aus dem Entladungsraum durch eine oder mehrere Oeffnungen in der Kathode emittiert werden, und dass diese Ionen ohne weitere Beschleunigung oder Fokussierung in einem Magnetfeld nach ihrem Impuls getrennt und gemessen werden.

2. Eine Partialdruckmesszelle gemäss Anspruch 1, gekennzeichnet dadurch, dass ein einziges Magnetsystem sowohl das Feld zur Massentrennung der Ionen wie auch zur Entladungsformung in der Ionenquelle erzeugt.

3. Eine Partialdruckmesszelle gemäss den Ansprüchen 1 und 2, gekennzeichnet durch einen zylindersymmetrischen, koaxialen Aufbau von Ionenquelle im Zentrum, magnetischem Massentrennsystem (Analysator) und Ionenkollektor.

4. Eine Partialdruckmesszelle gemäss den Ansprüchen 1, 2 und 3, bestehend aus einer Ionenquelle mit mehreren Ionenaustrittsöffnungen und gekennzeichnet durch die Verwendung von mehreren, auf den gleichen Massenzahlbereich eingestellten Analysatoren und Messung der Summe der Ionenströme auf einem gemeinsamen Ionenkollektor, zwecks Erhöhung der Empfindlichkeit der Messzelle.

5. Eine Partialdruckmesszelle gemäss den Ansprüchen 1, 2 und 3, bestehend aus einer Ionenquelle mit mehreren Ionenaustrittsöffnungen und gekennzeichnet durch die Verwendung von mehreren, auf unterschiedliche Massenzahlen eingestellte Analysatoren mit zugehörigen, von einander getrennten Ionenkollektoren, zur simultanen Messung des Partialdruckes in unterschiedlichen Massenzahlbereichen.

6. Eine Partialdruckmesszelle gemäss den Ansprüchen 1, 2 und 3, gekennzeichnet dadurch, dass das Analysatorsystem vor oder während der Benützung der Messzelle auf den Massenzahlbereich, in dem der Druck gemessen werden soll, eingestellt werden kann.

## Claims

1. A partial pressure gauge, especially suited for leak detection in vacuum systems, characterized in that the discharge in a cold cathode discharge with magnetic discharge control serving as ion source of a mass spectrometer is modified by an inhomogeneous magnetic field such that ions with a low energy and small energy spread are emitted from the discharge region through one or more openings in the cathode, and that these ions are separated and measured in a magnetic field according to their impulse without further acceleration or focussing.

2. A partial pressure gauge according to claim 1, characterized in that a single magnetic system generates the field for mass separation of the ions as well as for discharge control in the ion source.

3. A partial pressure gauge according to the claims 1 and 2, characterized by a cylinder-symmetrical coaxial set-up of ion source in the center, magnetic mass separation system (analyzer) and ion collector.

4. A partial pressure gauge according to the claims 1, 2 and 3 comprising an ion source with several ion emitting apertures and characterized by the utilization of several analyzers set to the same range of mass numbers and the measurement of the sum of ion currents on a common ion collector as a means to increase the sensitivity of the gauge.

5. A partial pressure gauge according to claims 1, 2 and 3 comprising an ion source with several ion emitting apertures and characterized by the utilization of several analyzers set to different ranges of mass numbers with corresponding separated ion collectors for the simultaneous measurement of the partial pressure in different ranges of mass numbers.

6. A partial pressure gauge according to claims 1, 2 and 3 characterized in that before or during the utilization of the gauge the analyzer system can be adjusted to the range of mass numbers within which the pressure is to be measured.

## Revendications

1. Cellule de mesure de la pression partielle appropriée particulièrement à la détection de fuites dans des systèmes du vide caractérisée en ce que, dans la cas d'une décharge à cathode froide servant de source d'ions d'un spectromètre de masse comportant un guidage magnétique de décharge; la décharge est modifiée par un champ magnétique hétérogène de sorte que des ions à faible énergie et faible dispersion de l'énergie sont émis de la chambre à décharge par une ou plusieurs ouvertures dans la cathode et que ces ions sont séparés et mesurés, après leur impulsion, sans autre accélération ou focalisation dans un champ magnétique.

2. Cellule de mesure de la pression partielle selon la revendication 1 caractérisée en ce qu'un seul système magnétique produit tant le champ de séparation des masses d'ions que celui de modelage de la décharge dans la source d'ions.

3. Cellule de mesure de la pression partielle selon les revendications 1 et 2 caractérisée par une structure coaxiale, cylindriquement symétrique à la source d'ions au centre du système magnétique de séparation des masses (analyseur) et au collecteur d'ions.

4. Cellule de mesure de la pression partielle selon les revendications 1, 2 et 3, se composant d'une source d'ions comportant plusieurs ouvertures de sortie d'ions, caractérisée par l'utilisation de plusieurs analyseurs ajustés sur le même domaine de nombre de masse et par la mesure de la somme des courants d'ions sur un même collecteur d'ions, en vue de l'accroissement de la sensibilité de la cellule de mesure.

5. Cellule de mesure de la pression partielle selon les revendications 1, 2 et 3, se composant d'une source d'ions comportant plusieurs ouvertures de sortie d'ions et caractérisée par l'utilisation de plusieurs analyseurs ajustés sur des nombres de masse différents, comportant des collecteurs d'ions correspondants séparés l'un de l'autre, en vue de la mesure simultanée de la pression partielle dans des domaines de nombre de masse différents.

6. Cellule de mesure de la pression partielle selon les revendications 1, 2 et 3 caractérisée en ce que le système analyseur peut être ajusté avant ou pendant l'utilisation de la cellule de mesure sur le domaine du nombre de masse dans lequel la pression doit être mesurée.
